# EUROPEAN PATENT SPECIFICATION

(11) **EP 2 930 890 B1**
(45) Date of publication and mention of the grant of the patent: **25.04.2018**
(21) Application number: 12891031.2
(22) Date of filing: 31.12.2012
(51) Int. Cl.: H04L 12/70, H04L 12/24, H04L 29/08, H04L 29/06, G06F 9/54

(54) **NETWORK DEVICE AND MESSAGE PROCESSING METHOD**
NETZWERKVORRICHTUNG UND NACHRICHTENVERARBEITUNGSVERFAHREN
DISPOSITIF DE RÉSEAU ET PROCÉDÉ DE TRAITEMENT DE MESSAGES

(43) Date of publication of application: 14.10.2015
(73) Proprietor: Huawei Technologies Co., Ltd., Longgang District Shenzhen, Guangdong 518129 (CN)
(72) Inventor: CHEN, Hongfei, Shenzhen Guangdong 518129 (CN); GONG, Jun, Shenzhen Guangdong 518129 (CN)
(74) Representative: Thun, Clemens
(86) International application number: PCT/CN2012/088062
(87) International publication number: WO 2014/101192

(56) References cited:
- WO-A1-99/64952
- WO-A2-03/021436
- CN-A- 1 595 910
- CN-A- 101 257 457
- CN-A- 101 335 644
- CN-A- 101 420 358
- US-A1- 2010 023 626
- US-A1- 2012 250 682

## Description

### TECHNICAL FIELD

The present invention relates to the field of communications, and in particular, to a network device and a packet processing method.

### BACKGROUND

Programmable processors have been widely applied in the field of communications. A network processor (network processor, NP) is a typical programmable processor. Currently, many routers and switches include an NP. To implement packet processing, a programmable processor may include code used to execute multiple protocols. For example, to implement Internet Protocol (Internet Protocol, IP) packet processing, a programmable processor may include code used to execute the IP. US2010/023626 A1 discloses a network processor including local memory and an interface to a host system. WO 99/64952 A1 discloses a system and a method for offloading functions and tasks that were previously performed at a processor-software level, to an appropriate hardware peripheral connected to the computer system. WO 03/021436 A2 discloses methods and apparatus for delivering selective offloading of protocol processing from a host computer to an offloading auxiliary processor. US 2012/250682 A1 discloses a method for offloading an operating task from the software component to a peripheral device.

To execute a protocol, code used to execute the protocol needs to be loaded into a programmable processor, and therefore storage space of the programmable processor is occupied.

### SUMMARY

To reduce occupation of storage space of a programmable processor, embodiments of the present invention provide a network device and a packet processing method.

According to a first aspect, a network device is provided, and includes a programmable processor and a non-programmable processor, where
the programmable processor includes a first control port;
the non-programmable processor includes a second control port, where the second control port is coupled with the first control port and the non-programmable processor and the programmable processor are included in a chip;
the programmable processor is configured to receive a first packet, wherein a protocol corresponding to a packet header of the first packet is a first protocol; and
the first control port and the second control port are configured to connect the programmable processor and the non-programmable processor, the programmable processor and the non-programmable processor are configured to collaboratively execute the first protocol on the first packet, the non-programmable processor is configured to determine an action of the first protocol to be executed by the programmable processor on the first packet, and the programmable processor is configured to execute the action.

It can be seen from the foregoing technical solution that, the programmable processor and the non-programmable processor are configured to collaboratively execute the first protocol on the first packet. The non-programmable processor is configured to determine the action to be executed by the programmable processor. The programmable processor can execute the action according to the action determined by the non-programmable processor. In the foregoing technical solution, even if the programmable processor does not include code used to execute the first protocol, the programmable processor can still execute the action of the first protocol on the first packet. Therefore, the-foregoing technical solution helps reduce occupation of storage space of the programmable processor.

In a first possible implementation manner of the network device provided by the first aspect, the action includes:
executing, by the programmable processor, a second protocol on a second packet, where the first packet includes the packet header of the first packet and the second packet, and a protocol corresponding to a packet header of the second packet is the second protocol; or
sending, by the programmable processor, information in a packet header of a second packet to a second non-programmable processor, so that the second non-programmable processor determines an action of a second protocol to be executed by the programmable processor on the second packet, where the first packet includes the packet header of the first packet and the second packet, and a protocol corresponding to the packet header of the second packet is the second protocol.

According to the network device provided by the first aspect or the first possible implementation manner of the network device provided by the first aspect, in a second possible implementation manner of the network device provided by the first aspect,
the second control port is configured to receive input information sent by the programmable processor, where the input information is information in the packet header of the first packet;
the non-programmable processor is configured to acquire output information according to the input information; and
the second control port is further configured to send the output information to the programmable processor, so that the programmable processor executes the action on the first packet according to the output information.

According to the second possible implementation manner of the network device provided by the first aspect, in a third possible implementation manner of the network device provided by the first aspect, acquiring the output information includes:
acquiring, by the non-programmable processor, intermediate data by interacting with a coprocessor; and
acquiring, by the non-programmable processor, the output information according to the intermediate data.

According to the third possible implementation manner of the network device provided by the first aspect, in a fourth possible implementation manner of the network device provided by the first aspect, the coprocessor includes at least one of the following: a search coprocessor, a committed access rate (committed access rate, CAR) coprocessor, and a counter (counter).

According to the network device provided by the first aspect, the first possible implementation manner of the network device provided by the first aspect, the second possible implementation manner of the network device provided by the first aspect, the third possible implementation manner of the network device provided by the first aspect, or the fourth possible implementation manner of the network device provided by the first aspect, in a fifth possible implementation manner of the network device provided by the first aspect, the programmable processor further includes code used to execute a third protocol.

According to the network device provided by the first aspect, the first possible implementation manner of the network device provided by the first aspect, the second possible implementation manner of the network device provided by the first aspect, the third possible implementation manner of the network device provided by the first aspect, the fourth possible implementation manner of the network device provided by the first aspect, or the fifth possible implementation manner of the network device provided by the first aspect, in a sixth possible implementation manner of the network device provided by the first aspect, the action includes:
sending, by the programmable processor, the first packet; or
discarding, by the programmable processor, the first packet.

According to a second aspect, a packet processing method is provided, and includes:
receiving, by a programmable processor, a first packet, where a protocol corresponding to a packet header of the first packet is a first protocol, and the programmable processor includes a first control port; and
executing collaboratively, by the programmable processor and a non-programmable processor, the first protocol on the first packet, where the non-programmable processor determines an action of the first protocol to be executed by the programmable processor on the first packet, the programmable processor executes the action, the non-programmable processor and the programmable processor are included in a chip, the non-programmable processor includes a second control port, the second control port is coupled with the first control port, and the first control port and the second control port are configured to connect the programmable processor and the non-programmable processor.

It can be seen from the foregoing technical solution that, the programmable processor and the non-programmable processor are configured to collaboratively execute the first protocol on the first packet. The non-programmable processor is configured to determine the action to be executed by the programmable processor. The programmable processor can execute the action according to the action determined by the non-programmable processor. In the foregoing technical solution, even if the programmable processor does not include code used to execute the first protocol, the programmable processor can still execute the action of the first protocol on the first packet. Therefore, the foregoing technical solution helps reduce occupation of storage space of the programmable processor.

In a first possible implementation manner of the method provided by the second aspect, the executing, by the programmable processor, the action includes:
executing, by the programmable processor, a second protocol on a second packet, where the first packet includes the packet header of the first packet and the second packet, and a protocol corresponding to a packet header of the second packet is the second protocol; or
sending, by the programmable processor, information in a packet header of a second packet to a second non-programmable processor, so that the second non-programmable processor determines an action of a second protocol to be executed by the programmable processor on the second packet, where the first packet includes the packet header of the first packet and the second packet, and a protocol corresponding to the packet header of the second packet is the second protocol.

According to the method provided by the second aspect, or the first possible implementation manner of the method provided by the second aspect, in a second possible implementation manner of the method provided by the second aspect, the determining, by the programmable processor, the action includes:
receiving, by the second control port, input information sent by the programmable processor, where the input information is information in the packet header of the first packet;
acquiring, by the non-programmable processor, output information according to the input information; and
sending, by the second control port, the output information to the programmable processor; and
the executing, by the programmable processor, the action includes:
   executing, by the programmable processor, the action on the first packet according to the output information.

According to the second possible implementation manner of the method provided by the second aspect, in a third possible implementation manner of the method provided by the second aspect, acquiring, by the non-programmable processor, the output information includes:
acquiring, by the non-programmable processor, intermediate data by interacting with a coprocessor; and
acquiring, by the non-programmable processor, the output information according to the intermediate data.

According to the third possible implementation manner of the method provided by the second aspect, in a fourth possible implementation manner of the method provided by the second aspect, the coprocessor includes at least one of the following: a search coprocessor, a committed access rate coprocessor, and a counter.

According to the method provided by the second aspect, the first possible implementation manner of the method provided by the second aspect, the second possible implementation manner of the method provided by the second aspect, the third possible implementation manner of the method provided by the second aspect, or the fourth possible implementation manner of the method provided by the second aspect, in a fifth possible implementation manner of the method provided by the second aspect, the programmable processor further includes code used to execute a third protocol.

According to the method provided by the second aspect, the first possible implementation manner of the method provided by the second aspect, the second possible implementation manner of the method provided by the second aspect, the third possible implementation manner of the method provided by the second aspect, the fourth possible implementation manner of the method provided by the second aspect, or the fifth possible implementation manner of the method provided by the second aspect, in a sixth possible implementation manner of the method provided by the second aspect, executing, by the programmable processor, the action includes:
sending, by the programmable processor, the first packet; or
discarding, by the programmable processor, the first packet.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a network device according to an embodiment of the present invention;
FIG. 2 is a schematic flowchart of a packet processing method according to an embodiment of the present invention;
FIG. 3 is a schematic flowchart of a packet processing method according to an embodiment of the present invention; and
FIG. 4 is a schematic flowchart of a packet processing method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

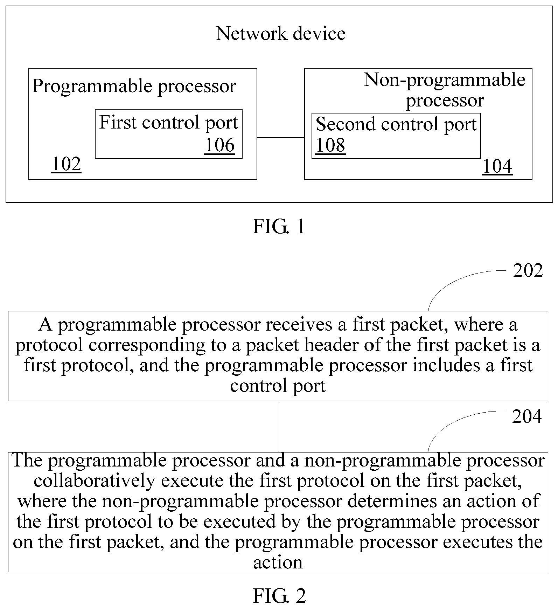

FIG. 1 is a schematic structural diagram of a network device according to an embodiment of the present invention. Referring to FIG. 1, the network device includes a programmable processor 102 and a non-programmable processor 104.

The programmable processor 102 includes a first control port 106.

The non-programmable processor 104 includes a second control port 108, and the second control port 108 is coupled with the first control port 106.

The programmable processor 102 is configured to receive a first packet, and a protocol corresponding to a packet header of the first packet is a first protocol.

The first control port 106 and the second control port 108 are configured to connect the programmable processor 102 and the non-programmable processor 104, the programmable processor 102 and the non-programmable processor 104 are configured to collaboratively execute the first protocol on the first packet, the non-programmable processor 104 is configured to determine an action of the first protocol to be executed by the programmable processor 102 on the first packet, and the programmable processor 102 is configured to execute the action.

For example, the programmable processor 102 may be an NP. The non-programmable processor 102 may be an application-specific integrated circuit (application-specific integrated circuit, ASIC).

For example, the programmable processor 102 and the non-programmable processor 104 may implement coupling by using an interconnecting circuit (interconnecting circuit). For example, one end of the interconnecting circuit is directly connected to the first control port 106. The other end of the interconnecting circuit is directly connected to the second control port 108. The interconnecting circuit may be a circuit inside a chip. The interconnecting circuit may be a crossbar (crossbar).

For example, the network device may be a chip, a printed circuit board (printed circuit board, PCB), or a network apparatus.

If the network device is a chip, the network device may be a system on a chip (System on a Chip, SoC).

If the network device is a printed circuit board, the printed circuit board includes a chip. The chip includes the programmable processor 102 and the non-programmable processor 104. The printed circuit board may be a line processing unit (line processing unit, LPU).

If the network device is a network apparatus, the network apparatus includes a printed circuit board. The printed circuit board includes a chip. The chip includes the programmable processor 102 and the non-programmable processor 104. For example, the network apparatus may be a router, a switch, a firewall, or a load balancer. The printed circuit board may be an LPU.

A processing procedure of the first protocol includes: determining, according to a provision of the first protocol and information in a packet header corresponding to the first protocol, an action to be executed on a packet that includes the packet header.

This embodiment of the present invention does not limit a type of the first protocol and the action.

It can be seen from the foregoing technical solution that, the programmable processor and the non-programmable processor are configured to collaboratively execute the first protocol on the first packet. The non-programmable processor is configured to determine the action to be executed by the programmable processor. The programmable processor can execute the action according to the action determined by the non-programmable processor. In the foregoing technical solution, even if the programmable processor does not include code used to execute the first protocol, the programmable processor can still execute the action of the first protocol on the first packet. Therefore, the foregoing technical solution helps reduce occupation of storage space of the programmable processor.

Optionally, in the network device shown in FIG. 1, the first protocol may be a Layer X protocol defined by the Open Systems Interconnect Reference Model (Open System Interconnect Reference Model, OSIRM), where X is at least one of 2, 2.5, 3, 4, 5, 6, and 7.

Optionally, in the network device shown in FIG. 1, the action includes:
executing, by the programmable processor, a second protocol on a second packet, where the first packet includes the packet header of the first packet and the second packet, and a protocol corresponding to a packet header of the second packet is the second protocol.

For example, the first packet may be an encapsulated Layer 2 Tunneling Protocol (Layer 2 Tunneling Protocol, L2TP) packet. The packet header of the first packet includes an Internet Protocol (Internet Protocol, IP) header and a User Datagram Protocol (User Datagram Protocol, UDP) header. The second packet may be an L2TP packet. The packet header of the second packet is an L2TP header. That the programmable processor executes the L2TP on the L2TP packet specifically may be that the programmable processor performs tunnel forwarding on the L2TP packet.

Optionally, in the network device shown in FIG. 1, the action includes:
sending, by the programmable processor, information in a packet header of a second packet to a second non-programmable processor, so that the second non-programmable processor determines an action of a second protocol to be executed by the programmable processor on the second packet, where the first packet includes the packet header of the first packet and the second packet, and a protocol corresponding to the packet header of the second packet is the second protocol.

For example, the second non-programmable processor can be configured to execute the Transmission Control Protocol (Transmission Control Protocol, TCP). The first packet may be an encapsulated TCP packet. The packet header of the first packet may be an IP header. The second packet may be a TCP packet. The packet header of the second packet is a TCP header. The TCP header includes a source TCP port and a destination TCP port. The programmable processor may send the source TCP port and the destination TCP port to the second non-programmable processor. The second non-programmable processor may determine the action of the second protocol according to the source TCP port and the destination TCP port. The action of the second protocol may be TCP forwarding.

Optionally, in the network device shown in FIG. 1,
the second control port is configured to receive input information sent by the programmable processor, where the input information is information in the packet header of the first packet;
the non-programmable processor is configured to acquire output information according to the input information; and
the second control port is further configured to send the output information to the programmable processor, so that the programmable processor executes the action on the first packet according to the output information.

Optionally, in the network device shown in FIG. 1, the non-programmable processor may be configured to execute the processing procedure of the first protocol. The processing procedure of the first protocol may be a forwarding processing procedure. The forwarding processing procedure includes: determining information used for matching in a packet header; searching a forwarding table for a forwarding entry that matches the information used for matching; and determining, according to the forwarding entry, an action to be executed on a packet that includes the packet header.

For example, the first protocol corresponding to the forwarding processing procedure may be a Layer 2 protocol, a Layer 2.5 protocol, or a Layer 3 protocol that is defined by the OSIRM. The Layer 2 protocol may be an Ethernet (Ethernet) protocol, the packet over synchronous digital hierarchy (packet over synchronous digital hierarchy, POS) protocol, or the asynchronous transfer mode (Asynchronous Transfer Mode, ATM) protocol. The Layer 2.5 protocol may be the Multiprotocol Label Switching (Multiprotocol Label Switching, MPLS) protocol. The Layer 3 protocol may be the IP.

For example, if the first protocol is the IP, the packet header is an IP header. The information may be a destination IP address in the IP header. Acquiring the output information according to the input information may be determining, according to the destination IP address, a routing entry that matches the destination IP address and is in a routing table. The output information may be an identifier of a next hop in the routing entry. The next hop may be an outbound interface that is configured to forward the first packet. The outbound interface may be a physical outbound interface. The action may be IP forwarding.

For example, if the first protocol is the Media Access Control (Media Access Control, MAC) protocol, the packet header is a MAC protocol header. The information may be a destination MAC protocol address in the MAC protocol header. Acquiring the output information according to the input information may be determining, according to the destination MAC protocol address, a MAC protocol entry that matches the destination MAC protocol address and is in a MAC protocol table. The output information may be an identifier of an outbound interface in the MAC protocol entry and configured to forward the first packet. The outbound interface may be a physical outbound interface or a logical outbound interface. The action may be MAC protocol forwarding.

It can be seen from the foregoing technical solution that, the non-programmable processor may be configured to execute the processing procedure of the first protocol. The programmable processor executes the action on the first packet according to the output information. In the prior art, the programmable processor needs to first acquire the input information, then acquire the output information according to the input information, and finally execute the action on the first packet according to the output information. A person skilled in the art may understand that, the non-programmable processor is pure hardware, and the programmable processor is a combination of software and hardware. Generally, an execution efficiency of the non-programmable processor is higher than that of the programmable processor. Therefore, compared with the prior art, the foregoing technical solution can be used to improve an execution efficiency.

Optionally, in the network device shown in FIG. 1, the action specifically may be forwarding, discarding the packet, encapsulating the packet, or sending the packet to a central processing unit (Central Processing Unit, CPU) of a control plane of a network apparatus. The programmable processor 102 and the non-programmable processor 104 are carried on the network apparatus.

For example, the forwarding may be IP forwarding, MPLS forwarding, or MAC protocol forwarding.

Optionally, in the network device shown in FIG. 1, acquiring the output information includes:
acquiring, by the non-programmable processor, intermediate data by interacting with a coprocessor; and
acquiring, by the non-programmable processor, the output information according to the intermediate data.

For example, the coprocessor may be an ASIC.

Optionally, in the network device shown in FIG. 1, the coprocessor may include at least one of the following: a search coprocessor, a CAR coprocessor, and a counter.

For example, if the coprocessor is a search coprocessor, the search coprocessor may acquire the intermediate data by searching a mapping table. The mapping table may be a longest prefix matching table, an exact matching table, an access control list (access control list, ACL), or a linear table. The ACL may be stored in a ternary content addressable memory (ternary content addressable memory, TCAM).

For example, the mapping table may be a forwarding table. The intermediate data may be an identifier of a next hop.

For example, if the coprocessor is a CAR coprocessor, the intermediate data may be information that is used to indicate whether forwarding the first packet is allowed or forbidden.

For example, if the coprocessor is a counter, the intermediate data may be information that is used to indicate whether forwarding the first packet is allowed or forbidden.

Optionally, in the network device shown in FIG. 1, the programmable processor 102 may further include code used to execute a third protocol.

A person skilled in the art may understand that, the programmable processor 102 may include an arithmetic logic unit (arithmetic logic unit, ALU) and a non-volatile storage medium. The non-volatile storage medium may be used to store the code used to execute a processing procedure of the third protocol. The ALU may execute the code used to execute the processing procedure of the third protocol.

For example, the third protocol may be a Layer Y protocol defined by the Open Systems Interconnect Reference Model, where Y is at least one of 2, 2.5, 3, 4, 5, 6, and 7.

For the processing procedure of the third protocol, specifically refer to the processing procedure of the first protocol. Details are not described herein again. It should be noted that the third protocol is different from the first protocol.

Optionally, in the network device shown in FIG. 1, the action includes:
sending, by the programmable processor, the first packet; or
discarding, by the programmable processor, the first packet.

FIG. 2 is a schematic flowchart of a packet processing method according to an embodiment of the present invention. The network device shown in FIG. 1 may be configured to execute the method. Referring to FIG. 2, the method includes:
202: A programmable processor receives a first packet, where a protocol corresponding to a packet header of the first packet is a first protocol, and the programmable processor includes a first control port.
204: The programmable processor and a non-programmable processor collaboratively execute the first protocol on the first packet, where the non-programmable processor determines an action of the first protocol to be executed by the programmable processor on the first packet, and the programmable processor executes the action.

The non-programmable processor includes a second control port, the second control port is coupled with the first control port, and the first control port and the second control port are configured to connect the programmable processor and the non-programmable processor.

For example, the programmable processor may be an NP. The non-programmable processor may be an ASIC.

For example, the programmable processor and the non-programmable processor may implement coupling by using an interconnecting circuit. For example, one end of the interconnecting circuit is directly connected to the first control port. The other end of the interconnecting circuit is directly connected to the second control port. The interconnecting circuit may be a circuit inside a chip. The interconnecting circuit may be a crossbar.

For example, the network device may be a chip, a PCB, or a network apparatus.

If the network device is a chip, the network device may be an SoC.

If the network device is a printed circuit board, the printed circuit board includes a chip. The chip includes the programmable processor and the non-programmable processor. The printed circuit board may be an LPU.

If the network device is a network apparatus, the network apparatus includes a printed circuit board. The printed circuit board includes a chip. The chip includes the programmable processor and the non-programmable processor. For example, the network apparatus may be a router, a switch, a firewall, or a load balancer. The printed circuit board may be an LPU.

A processing procedure of the first protocol includes: determining, according to a provision of the first protocol and information in a packet header corresponding to the first protocol, an action to be executed on a packet that includes the packet header.

This embodiment of the present invention does not limit a type of the first protocol and the action.

It can be seen from the foregoing technical solution that, the programmable processor and the non-programmable processor are configured to collaboratively execute the first protocol on the first packet. The non-programmable processor is configured to determine the action to be executed by the programmable processor. The programmable processor can execute the action according to the action determined by the non-programmable processor. In the foregoing technical solution, even if the programmable processor does not include code used to execute the first protocol, the programmable processor can still execute the action of the first protocol on the first packet. Therefore, the foregoing technical solution helps reduce occupation of storage space of the programmable processor.

Optionally, the first protocol may be a Layer X protocol defined by the OSIRM, where X is at least one of 2, 2.5, 3, 4, 5, 6, and 7.

Optionally, in the method shown in FIG. 2, the executing, by the programmable processor, the action may include:
executing, by the programmable processor, a second protocol on a second packet, where the first packet includes the packet header of the first packet and the second packet, and a protocol corresponding to a packet header of the second packet is the second protocol.

For example, the first packet may be an encapsulated Layer 2 Tunneling Protocol (Layer 2 Tunneling Protocol, L2TP) packet. The packet header of the first packet includes an Internet Protocol (Internet Protocol, IP) header and a User Datagram Protocol (User Datagram Protocol, UDP) header. The second packet may be an L2TP packet. The packet header of the second packet is an L2TP header. That the programmable processor executes the L2TP on the L2TP packet specifically may be that the programmable processor performs tunnel forwarding on the L2TP packet.

Optionally, in the method shown in FIG. 2, the executing, by the programmable processor, the action may include:
sending, by the programmable processor, information in a packet header of a second packet to a second non-programmable processor, so that the second non-programmable processor determines an action of a second protocol to be executed by the programmable processor on the second packet, where the first packet includes the packet header of the first packet and the second packet, and a protocol corresponding to the packet header of the second packet is the second protocol.

For example, the second non-programmable processor can be configured to execute the TCP. The first packet may be an encapsulated TCP packet. The packet header of the first packet may be an IP header. The second packet may be a TCP packet. The packet header of the second packet is a TCP header. The TCP header includes a source TCP port and a destination TCP port. The programmable processor may send the source TCP port and the destination TCP port to the second non-programmable processor. The second non-programmable processor may determine the action of the second protocol according to the source TCP port and the destination TCP port. The action of the second protocol may be TCP forwarding.

Optionally, in the method shown in FIG. 2, the determining, by the programmable processor, the action includes:
302: The second control port receives input information sent by the programmable processor, where the input information is information in the packet header of the first packet.
304: The non-programmable processor acquires output information according to the input information.
306: The second control port sends the output information to the programmable processor.

The executing, by the programmable processor, the action includes:
executing, by the programmable processor, the action on the first packet according to the output information.

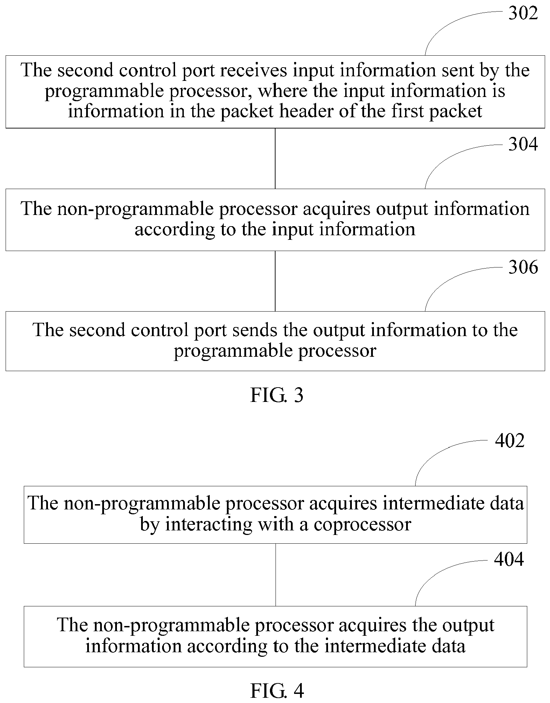

For 302, 304, and 306, refer to FIG. 3.

Optionally, in the method shown in FIG. 2, the non-programmable processor may be configured to execute the processing procedure of the first protocol. The processing procedure of the first protocol may be a forwarding processing procedure. The forwarding processing procedure includes: determining information used for matching in a packet header; searching a forwarding table for a forwarding entry that matches the information used for matching; and determining, according to the forwarding entry, an action to be executed on a packet that includes the packet header.

For example, the first protocol corresponding to the forwarding processing procedure may be a Layer 2 protocol, a Layer 2.5 protocol, or a Layer 3 protocol that is defined by the OSIRM. The Layer 2 protocol may be an Ethernet protocol, the POS protocol, or the ATM protocol. The Layer 2.5 protocol may be the Multiprotocol Label Switching MPLS protocol. The Layer 3 protocol may be the IP.

For example, if the first protocol is the IP, the packet header is an IP header. The information may be a destination IP address in the IP header. Acquiring the output information according to the input information may be determining, according to the destination IP address, a routing entry that matches the destination IP address and is in a routing table. The output information may be an identifier of a next hop in the routing entry. The next hop may be an outbound interface that is configured to forward the first packet. The outbound interface may be a physical outbound interface. The action may be IP forwarding.

For example, if the first protocol is the MAC protocol, the packet header is a MAC protocol header. The information may be a destination MAC protocol address in the MAC protocol header. Acquiring the output information according to the input information may be determining, according to the destination MAC protocol address, a MAC protocol entry that matches the destination MAC protocol address and is in a MAC protocol table. The output information may be an identifier of an outbound interface in the MAC protocol entry and configured to forward the first packet. The outbound interface may be a physical outbound interface or a logical outbound interface. The action may be MAC protocol forwarding.

It can be seen from the foregoing technical solution that, the non-programmable processor may be configured to execute the processing procedure of the first protocol. The programmable processor executes the action on the first packet according to the output information. In the prior art, the programmable processor needs to first acquire the input information, then acquire the output information according to the input information, and finally execute the action on the first packet according to the output information. A person skilled in the art may understand that, the non-programmable processor is pure hardware, and the programmable processor is a combination of software and hardware. Generally, an execution efficiency of the non-programmable processor is higher than that of the programmable processor. Therefore, compared with the prior art, the foregoing technical solution can be used to improve an execution efficiency.

Optionally, in the method shown in FIG. 2, the action specifically may be forwarding, discarding the packet, encapsulating the packet, or sending the packet to a CPU of a control plane of a network apparatus. The programmable processor and the non-programmable processor are carried on the network apparatus.

For example, the forwarding may be IP forwarding, MPLS forwarding, or MAC protocol forwarding.

Optionally, in the method shown in FIG. 2, acquiring, by the non-programmable processor, the output information includes:
402: The non-programmable processor acquires intermediate data by interacting with a coprocessor.
404: The non-programmable processor acquires the output information according to the intermediate data.

For example, the coprocessor may be an ASIC.

For 402 and 404, refer to FIG. 4.

Optionally, in the method shown in FIG. 2,
the coprocessor includes at least one of the following: a search coprocessor, a committed access rate coprocessor, and a counter.

For example, if the coprocessor is a search coprocessor, the search coprocessor may acquire the intermediate data by searching a mapping table. The mapping table may be a longest prefix matching table, an exact matching table, an ACL, or a linear table. The ACL may be stored in a TCAM.

For example, the mapping table may be a forwarding table. The intermediate data may be an identifier of a next hop.

For example, if the coprocessor is a CAR coprocessor, the intermediate data may be information that is used to indicate whether forwarding the first packet is allowed or forbidden.

For example, if the coprocessor is a counter, the intermediate data may be information that is used to indicate whether forwarding the first packet is allowed or forbidden.

Optionally, in the method shown in FIG. 2,
the programmable processor further includes code used to execute a third protocol.

A person skilled in the art may understand that, the programmable processor may include an ALU and a non-volatile storage medium. The non-volatile storage medium may be used to store the code used to execute a processing procedure of the third protocol. The ALU may execute the code used to execute the processing procedure of the third protocol.

For example, the third protocol may be a Layer Y protocol defined by the OSIRM, where Y is at least one of 2, 2.5, 3, 4, 5, 6, and 7.

For the processing procedure of the third protocol, specifically refer to the processing procedure of the first protocol. Details are not described herein again. It should be noted that the third protocol is different from the first protocol.

Optionally, in the method shown in FIG. 2, the executing, by the programmable processor, the action includes:
sending, by the programmable processor, the first packet; or
discarding, by the programmable processor, the first packet.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A network device, comprising a programmable processor (102) and a non-programmable processor (104), wherein:
the programmable processor (102) comprises a first control port (106);
the non-programmable processor (104) comprises a second control port (108), wherein the second control port (108) is coupled with the first control port (106) and the non-programmable processor (104) and the programmable processor (102) are included in a chip;
the programmable processor (102) is configured to receive a first packet, wherein a protocol corresponding to a packet header of the first packet is a first protocol; and
the first control port (106) and the second control port (108) are configured to connect the programmable processor (102) and the non-programmable processor (104), the programmable processor (102) and the non-programmable processor (104) are configured to collaboratively execute the first protocol on the first packet, the non-programmable processor (104) is configured to determine an action of the first protocol to be executed by the programmable processor on the first packet, and the programmable processor (102) is configured to execute the action.

2. The network device according to claim 1, wherein the action comprises:
executing, by the programmable processor (102), a second protocol on a second packet, wherein the first packet comprises the packet header of the first packet and the second packet, and a protocol corresponding to a packet header of the second packet is the second protocol; or
sending, by the programmable processor (102), information in a packet header of a second packet to a second non-programmable processor, so that the second non-programmable processor determines an action of a second protocol to be executed by the programmable processor (102) on the second packet, wherein the first packet comprises the packet header of the first packet and the second packet, and a protocol corresponding to the packet header of the second packet is the second protocol.

3. The network device according to claim 1 or 2, wherein:
the second control port (108) is configured to receive input information sent by the programmable processor (102), wherein the input information is information in the packet header of the first packet;
the non-programmable processor (104) is configured to acquire output information according to the input information; and
the second control port is further configured to send the output information to the programmable processor (102), so that the programmable processor (102) executes the action on the first packet according to the output information.

4. The network device according to claim 3, wherein acquiring the output information comprises:
acquiring, by the non-programmable processor (104), intermediate data by interacting with a coprocessor; and
acquiring, by the non-programmable processor (104), the output information according to the intermediate data.

5. The network device according to claim 4, wherein:
the coprocessor comprises at least one of the following: a search coprocessor, a committed access rate coprocessor, and a counter.

6. The network device according to any one of claims 1 to 5, wherein:
the programmable processor (102) further comprises code used to execute a third protocol.

7. The network device according to any one of claims 1 to 6, wherein the action comprises:
sending, by the programmable processor (102), the first packet; or
discarding, by the programmable processor (102), the first packet.

8. A packet processing method, comprising:
receiving (202), by a programmable processor, a first packet, wherein a protocol corresponding to a packet header of the first packet is a first protocol, and the programmable processor comprises a first control port; and
executing collaboratively (204), by the programmable processor and a non-programmable processor, the first protocol on the first packet, wherein the non-programmable processor determines an action of the first protocol to be executed by the programmable processor on the first packet, the programmable processor executes the action, the non-programmable processor and the programmable processor are included in a chip, the non-programmable processor comprises a second control port, the second control port is coupled with the first control port, and the first control port and the second control port are configured to connect the programmable processor and the non-programmable processor.

9. The method according to claim 8, wherein the executing, by the programmable processor, the action comprises:
executing, by the programmable processor, a second protocol on a second packet, wherein the first packet comprises the packet header of the first packet and the second packet, and a protocol corresponding to a packet header of the second packet is the second protocol; or
sending, by the programmable processor, information in a packet header of a second packet to a second non-programmable processor, so that the second non-programmable processor determines an action of a second protocol to be executed by the programmable processor on the second packet, wherein the first packet comprises the packet header of the first packet and the second packet, and a protocol corresponding to the packet header of the second packet is the second protocol.

10. The method according to claim 8 or 9, wherein:
the determining, by the programmable processor, the action comprises:
receiving (302), by the second control port, input information sent by the programmable processor, wherein the input information is information in the packet header of the first packet;
acquiring (304), by the non-programmable processor, output information according to the input information; and
sending (306), by the second control port, the output information to the programmable processor; and
the executing, by the programmable processor, the action comprises:
executing, by the programmable processor, the action on the first packet according to the output information.

11. The method according to claim 10, wherein acquiring, by the non-programmable processor, the output information comprises:
acquiring (402), by the non-programmable processor, intermediate data by interacting with a coprocessor; and
acquiring (404), by the non-programmable processor, the output information according to the intermediate data.

12. The method according to claim 11, wherein:
the coprocessor comprises at least one of the following: a search coprocessor, a committed access rate coprocessor, and a counter.

13. The method according to any one of claims 8 to 12, wherein:
the programmable processor further comprises code used to execute a third protocol.

14. The method according to any one of claims 8 to 13, wherein the executing, by the programmable processor, the action comprises:
sending, by the programmable processor, the first packet; or
discarding, by the programmable processor, the first packet.

## Patentansprüche

1. Netzvorrichtung, die einen programmierbaren Prozessor (102) und einen nicht programmierbaren Prozessor (104) umfasst, wobei:
der programmierbare Prozessor (102) einen ersten Steueranschluss (106) umfasst;
der nicht programmierbare Prozessor (104) einen zweiten Steueranschluss (108) umfasst, wobei der zweite Steueranschluss (108) mit dem ersten Steueranschluss (106) gekoppelt ist und der nicht programmierbare Prozessor (104) und der programmierbare Prozessor (102) in einem Chip enthalten sind;
der programmierbare Prozessor (102) konfiguriert ist, ein erstes Paket zu empfangen, wobei ein Protokoll, das einem Paketkopf des ersten Pakets entspricht, ein erstes Protokoll ist; und
der erste Steueranschluss (106) und der zweite Steueranschluss (108) konfiguriert sind, den programmierbaren Prozessor (102) und den nicht programmierbaren Prozessor (104) zu verbinden, wobei der programmierbare Prozessor (102) und der nicht programmierbare Prozessor (104) konfiguriert sind, das erste Protokoll an dem ersten Paket arbeitsteilig auszuführen, der nicht programmierbare Prozessor (104) konfiguriert ist, eine Aktion des ersten Protokolls zu bestimmen, die durch den programmierbaren Prozessor an dem ersten Paket ausgeführt werden soll, und der programmierbare Prozessor (102) konfiguriert ist, die Aktion auszuführen.

2. Netzvorrichtung nach Anspruch 1, wobei die Aktion Folgendes umfasst:
Ausführen durch den programmierbaren Prozessor (102) eines zweiten Protokolls an einem zweiten Paket, wobei das erste Paket den Paketkopf des ersten Pakets und des zweiten Pakets umfasst und ein Protokoll, das einem Paketkopf des zweiten Pakets entspricht, das zweite Protokoll ist; oder
Senden durch den programmierbaren Prozessor (102) von Informationen in einem Paketkopf eines zweiten Pakets zu einem zweiten nicht programmierbaren Prozessor, so dass der zweite nicht programmierbare Prozessor eine Aktion eines zweiten Protokolls bestimmt, die durch den programmierbaren Prozessor (102) an dem zweiten Paket ausgeführt werden soll, wobei das erste Paket den Paketkopf des ersten Pakets und des zweiten Pakets umfasst und ein Protokoll, das dem Paketkopf des zweiten Pakets entspricht, das zweite Protokoll ist.

3. Netzvorrichtung nach Anspruch 1 oder 2, wobei:
der zweite Steueranschluss (108) konfiguriert ist, Eingangsinformationen zu empfangen, die durch den programmierbaren Prozessor (102) gesendet werden, wobei die Eingangsinformationen Informationen in dem Paketkopf des ersten Pakets sind;
der nicht programmierbare Prozessor (104) konfiguriert ist, Ausgangsinformationen gemäß den Eingangsinformationen zu erfassen; und
der zweite Steueranschluss ferner konfiguriert ist, die Ausgangsinformationen zu dem programmierbaren Prozessor (102) zu senden, so dass der programmierbare Prozessor (102) die Aktion an dem ersten Paket gemäß den Ausgangsinformationen ausführt.

4. Netzvorrichtung nach Anspruch 3, wobei das Erfassen der Ausgangsinformationen Folgendes umfasst:
Erfassen durch den nicht programmierbaren Prozessor (104) von Zwischendaten durch Zusammenwirken mit einem Coprozessor; und
Erfassen durch den nicht programmierbaren Prozessor (104) der Ausgangsinformationen gemäß den Zwischendaten.

5. Netzvorrichtung nach Anspruch 4, wobei:
der Coprozessor wenigstens einen der Folgenden umfasst: einen Such-Coprozessor, einen Coprozessor mit vereinbarter Zugriffsrate und einen Zähler.

6. Netzvorrichtung nach einem der Ansprüche 1 bis 5, wobei:
der programmierbare Prozessor (102) ferner Code umfasst, der verwendet wird, um ein drittes Protokoll auszuführen.

7. Netzvorrichtung nach einem der Ansprüche 1 bis 6, wobei die Aktion Folgendes umfasst:
Senden durch den programmierbaren Prozessor (102) des ersten Pakets; oder Verwerfen durch den programmierbaren Prozessor (102) des ersten Pakets.

8. Paketverarbeitungsverfahren, das Folgendes umfasst:
Empfangen (202) durch einen programmierbaren Prozessor eines ersten Pakets, wobei ein Protokoll, das einem Paketkopf des ersten Pakets entspricht, ein erstes Protokoll ist und der programmierbare Prozessor einen ersten Steueranschluss umfasst; und
arbeitsteiliges Ausführen (204) durch den programmierbaren Prozessor und einen nicht programmierbaren Prozessor des ersten Protokolls an dem ersten Paket, wobei der nicht programmierbare Prozessor eine Aktion des ersten Protokolls bestimmt, die durch den programmierbaren Prozessor an dem ersten Paket ausgeführt werden soll, der programmierbare Prozessor die Aktion ausführt, der nicht programmierbare Prozessor und der programmierbare Prozessor auf einem Chip enthalten sind, der nicht programmierbare Prozessor einen zweiten Steueranschluss umfasst, der zweite Steueranschluss mit dem ersten Steueranschluss gekoppelt ist und der erste Steueranschluss und der zweite Steueranschluss konfiguriert sind, den programmierbaren Prozessor und den nicht programmierbaren Prozessor zu verbinden.

9. Verfahren nach Anspruch 8, wobei das Ausführen der Aktion durch den programmierbaren Prozessor Folgendes umfasst:
Ausführen durch den programmierbaren Prozessor eines zweiten Protokolls auf einem zweiten Paket, wobei das erste Paket den Paketkopf des ersten Pakets und das zweite Paket umfasst und ein Protokoll, das einem Paketkopf des zweiten Pakets entspricht, das zweite Protokoll ist; oder
Senden durch den programmierbaren Prozessor von Informationen in einem Paketkopf eines zweiten Pakets zu einem zweiten nicht programmierbaren Prozessor, so dass der zweite nicht programmierbare Prozessor eine Aktion eines zweiten Protokolls bestimmt, die durch den programmierbaren Prozessor an dem zweiten Paket ausgeführt werden soll, wobei das erste Paket den Paketkopf des ersten Pakets und das zweite Paket umfasst und ein Protokoll, das dem Paketkopf des zweiten Pakets entspricht, das zweite Protokoll ist.

10. Verfahren nach Anspruch 8 oder 9, wobei:
das Bestimmen der Aktion durch den programmierbaren Prozessor Folgendes umfasst:
Empfangen (302) durch den zweiten Steueranschluss von Eingangsinformationen, die durch den programmierbaren Prozessor gesendet werden, wobei die Eingangsinformationen Informationen in dem Paketkopf des ersten Pakets sind;
Erfassen (304) durch den nicht programmierbaren Prozessor von Ausgangsinformationen gemäß den Eingangsinformationen; und
Senden (306) durch den zweiten Steueranschluss der Ausgangsinformationen zu dem programmierbaren Prozessor; und
das Ausführen der Aktion durch den programmierbaren Prozessor Folgendes umfasst: Ausführen durch den programmierbaren Prozessor der Aktion an dem ersten Paket gemäß den Ausgangsinformationen.

11. Verfahren nach Anspruch 10, wobei das Erfassen der Ausgangsinformationen durch den nicht programmierbaren Prozessor Folgendes umfasst:
Erfassen (402) durch den nicht programmierbaren Prozessor von Zwischendaten durch Zusammenwirken mit einem Coprozessor; und
Erfassen (404) durch den nicht programmierbaren Prozessor der Ausgangsinformationen gemäß den Zwischendaten.

12. Verfahren nach Anspruch 11, wobei:
der Coprozessor wenigstens einen der Folgenden umfasst: einen Such-Coprozessor, einen Coprozessor mit vereinbarter Zugriffsrate und einen Zähler.

13. Verfahren nach einem der Ansprüche 8 bis 12, wobei:
der programmierbare Prozessor ferner Code umfasst, der verwendet wird, um ein drittes Protokoll auszuführen.

14. Verfahren nach einem der Ansprüche 8 bis 13, wobei das Ausführen der Aktion durch den programmierbaren Prozessor Folgendes umfasst:
Senden durch den programmierbaren Prozessor des ersten Pakets; oder Verwerfen durch den programmierbaren Prozessor des ersten Pakets.

## Revendications

1. Dispositif réseau, comprenant un processeur programmable (102) et un processeur non programmable (104), dans lequel :
le processeur programmable (102) comprend un premier port de commande (106) ;
le processeur non programmable (104) comprend un deuxième port de commande (108), le deuxième port de commande (108) étant couplé au premier port de commande (106) et le processeur non programmable (104) et le processeur programmable (102) étant inclus dans une puce ;
le processeur programmable (102) est configuré pour recevoir un premier paquet, un protocole correspondant à un en-tête de paquet du premier paquet étant un premier protocole ; et
le premier port de commande (106) et le deuxième port de commande (108) sont configurés pour connecter le processeur programmable (102) et le processeur non programmable (104), le processeur programmable (102) et le processeur non programmable (104) sont configurés pour exécuter de façon collaborative le premier protocole sur le premier paquet, le processeur non programmable (104) est configuré pour déterminer une action du premier protocole devant être exécuté par le processeur programmable sur le premier paquet, et le processeur programmable (102) est configuré pour exécuter l'action.

2. Dispositif réseau selon la revendication 1, dans lequel l'action comprend :
exécuter, par le processeur programmable (102), un deuxième protocole sur un deuxième paquet, le premier paquet comportant l'en-tête de paquet du premier paquet et du deuxième paquet, et un protocole correspondant à un en-tête de paquet du deuxième paquet étant le deuxième protocole ; ou
envoyer, par le processeur programmable (102), des informations dans un en-tête de paquet d'un deuxième paquet à un deuxième processeur non programmable, afin que le deuxième processeur non programmable détermine une action d'un deuxième protocole devant être exécuté par le processeur programmable (102) sur le deuxième paquet, le premier paquet comportant l'en-tête de paquet du premier paquet et du deuxième paquet, et un protocole correspondant à l'en-tête de paquet du deuxième paquet étant le deuxième protocole.

3. Dispositif réseau selon la revendication 1 ou 2, dans lequel :
le deuxième port de commande (108) est configuré pour recevoir des informations d'entrée envoyées par le processeur programmable (102), les informations d'entrée étant des informations dans l'en-tête de paquet du premier paquet ;
le processeur non programmable (104) est configuré pour acquérir des informations de sortie selon les informations d'entrée ; et
le deuxième port de commande est en outre configuré pour envoyer les informations de sortie au processeur programmable (102), afin que le processeur programmable (102) exécute l'action sur le premier paquet selon les informations de sortie.

4. Dispositif réseau selon la revendication 3, dans lequel l'étape consistant à acquérir les informations de sortie comprend :
acquérir, par le processeur non programmable (104), des données intermédiaires en interagissant avec un coprocesseur ; et
acquérir, par le processeur non programmable (104), les informations de sortie selon les données intermédiaires.

5. Dispositif réseau selon la revendication 4, dans lequel :
le coprocesseur comprend au moins un des éléments suivants : un coprocesseur de recherche, un coprocesseur à débit garanti, et un compteur.

6. Dispositif réseau selon l'une quelconque des revendications 1 à 5, dans lequel :
le processeur programmable (102) comprend en outre un code utilisé pour exécuter un troisième protocole.

7. Dispositif réseau selon l'une quelconque des revendications 1 à 6, dans lequel l'action comprend :
envoyer, par le processeur programmable (102), le premier paquet ; ou
rejeter, par le processeur programmable (102), le premier paquet.

8. Procédé de traitement de paquet, comprenant :
recevoir (202), par un processeur programmable, un premier paquet, un protocole correspondant à un en-tête de paquet du premier paquet étant un premier protocole, et le processeur programmable comportant un premier port de commande ; et
exécuter de façon collaborative (204), par le processeur programmable et un processeur non programmable, le premier protocole sur le premier paquet, le processeur non programmable déterminant une action du premier protocole devant être exécuté par le processeur programmable sur le premier paquet, le processeur programmable exécutant l'action, le processeur non programmable et le processeur programmable étant inclus dans une puce, le processeur non programmable comportant un deuxième port de commande, le deuxième port de commande étant couplé au premier port de commande, et le premier port de commande et le deuxième port de commande étant configurés pour connecter le processeur programmable et le processeur non programmable.

9. Procédé selon la revendication 8, dans lequel l'étape consistant à exécuter, par le processeur programmable, l'action comprend :
exécuter, par le processeur programmable, un deuxième protocole sur un deuxième paquet, le premier paquet comprenant l'en-tête de paquet du premier paquet et du deuxième paquet, et un protocole correspondant à un en-tête de paquet du deuxième paquet étant le deuxième protocole ; ou
envoyer, par le processeur programmable, des informations dans un en-tête de paquet d'un deuxième paquet à un deuxième processeur non programmable, afin que le deuxième processeur non programmable détermine une action d'un deuxième protocole devant être exécuté par le processeur programmable sur le deuxième paquet, le premier paquet comportant l'en-tête de paquet du premier paquet et du deuxième paquet, et un protocole correspondant à l'en-tête de paquet du deuxième paquet étant le deuxième protocole.

10. Procédé selon la revendication 8 ou 9, dans lequel :
l'étape consistant à déterminer, par le processeur programmable, l'action comprend :
recevoir (302), par le deuxième port de commande, des informations d'entrée envoyées par le processeur programmable, les informations d'entrée étant des informations dans l'en-tête de paquet du premier paquet ;
acquérir (304), par le processeur non programmable, des informations de sortie selon les informations d'entrée ; et
envoyer (306), par le deuxième port de commande, les informations de sortie au processeur programmable ; et
l'étape consistant à exécuter, par le processeur programmable, l'action comprend :
exécuter, par le processeur programmable, l'action sur le premier paquet selon les informations de sortie.

11. Procédé selon la revendication 10, dans lequel l'étape consistant à acquérir, par le processeur non programmable, les informations de sortie comprend :
acquérir (402), par le processeur non programmable, des données intermédiaires en interagissant avec un coprocesseur ; et
acquérir (404), par le processeur non programmable, les informations de sortie selon les données intermédiaires.

12. Procédé selon la revendication 11, dans lequel :
le coprocesseur comprend au moins un des éléments suivants : un coprocesseur de recherche, un coprocesseur à débit garanti, et un compteur.

13. Procédé selon l'une quelconque des revendications 8 à 12, dans lequel :
le processeur programmable comprend en outre un code utilisé pour exécuter un troisième protocole.

14. Procédé selon l'une quelconque des revendications 8 à 13, dans lequel l'étape consistant à exécuter, par le processeur programmable, l'action comprend :
envoyer, par le processeur programmable, le premier paquet ; ou
rejeter, par le processeur programmable, le premier paquet.
